# EUROPEAN PATENT SPECIFICATION

(11) **EP 1 309 265 B1**
(45) Date of publication and mention of the grant of the patent: **18.10.2006**
(21) Application number: 01944287.0
(22) Date of filing: 05.06.2001
(51) Int. Cl.: A47J 37/07

(54) **METHOD AND APPARATUS FOR PROVIDING A PORTABLE PREASSEMBLED GRILL**
VERFAHREN UND VORRICHTUNG ZUM BEREITSTELLEN EINES TRAGBAREN VORMONTIERTEN GRILLS
PROCEDE ET APPAREIL POUR FORMER UN GRIL PORTATIF PREASSEMBLE

(30) Priority: 05.06.2000 US 209735 P; 27.09.2000 US 671093
(43) Date of publication of application: 14.05.2003
(73) Proprietor: Meco Corporation, Greenville, TN 37745 (US)
(72) Inventor: WARD, Eric, A., Telford, TN 37690 (US); BUONO, Steven, A., Greeneville, TN 37745 (US); FOX, Jeffery, G., Greeneville, TN 37743 (US); SMELCER, Claude, N., Parrottsville, TN 37843 (US)
(74) Representative: Rehmann, Thorsten
(86) International application number: PCT/US2001/018151
(87) International publication number: WO 2001/093734

(56) References cited:
- EP-A- 0 625 327
- US-A- 2 787 996
- US-A- 3 386 430
- US-A- 4 210 118
- US-A- 4 621 608
- US-A- 4 836 179
- US-A- 5 163 414

## Description

### FIELD OF THE INVENTION

The present invention is to a method and apparatus for providing a portable preassembled grill. More particularly, the invention is drawn to providing a grill having two pairs of pivoting legs which collapse and have wheels at one end. The portable preassembled grill is configured for easy shipping, consumer handling, and storage by the consumer, but assembles without tools. The portable preassembled grill of the present invention provides the benefits of portability and storability for consumers.

### BACKGROUND INFORMATION

Outdoor barbecue cooking continues to grow in popularity despite certain difficulties and inconveniences. An initial difficulty for consumers can be getting the grill home. Preassembled grills can be very bulky and difficult to transport at both the wholesale and consumer level. To address this, many grills are shipped unassembled or partially assembled. Although this solves part of the shipping problems, it causes other problems. If a consumer purchases a grill unassembled, the consumer can get the grill home, but then needs to perform the assembly.

If the consumer is not handy, assembly can often present insurmountable problems. Often, these people will therefore purchase assembled grills and then be confronted with the aforementioned transport problem. Sometimes these people will attempt to assemble the grill on their own, but discover they lack the required tools. If they have the tools, they may assemble the grill improperly, which can be especially dangerous with gas grills. If, perchance, they have the required tools and assemble it properly, it will usually take quite a bit of time and aggravation, and will delay grilling.

Handy consumers can usually assemble a grill properly, but are delayed from grilling during the assembly time.

Another difficulty faced by consumers is that outdoor barbecue cooking has increasingly expanded from the back yard to locations such as tailgate parties, beach outings, picnic outings, etc. that require the consumer to bring the grill with them. Although many portable grills exist, most have unacceptably small grilling surfaces, can be inconveniently short when in use because they lack full-sized legs, and/or can leave a mess in the consumer's vehicle.

All consumers must deal with the problem of grill storage. Although many grills fold for storage, most have only one or two of the common storage modes of (i) folding flat for prone storage, (ii) folding flat to hang on a wall, or (iii) folding flat and standing to lean against a wall.

And as a final difficulty, even those with room on their deck or in their backyard must deal with protecting their grills from the elements.

To address many of these problems, some consumers have opted for preassembled, portable camping or picnic-type grilling devices, such as U.S. Patent Nos. 1,273,840, 1,309,049, 2,597,477, 3,025,849, 3,611,912, 4,334,516, 4,621,608, 4,706,817, 4,836,179, 5,105,726, 5,174,197, 5,317,961, 5,423,308, 5,605,142, and 5,947,007 that use non-intersecting pivotally legs, or U.S. Patent Nos. 2,515,521, 5,836,295, or 5,906,196 that use non-intersecting detachable or telescoping legs, or U.S. Patent Nos. 3,447,530, 4,026,266, or 4,488,535 that can use intersecting legs. Although these grills will typically solve at least some of the transport, assembly and storage problems, they also will typically lack the functionality of a full-sized grill and can be bulky or difficult to handle when transporting from a vehicle to a cooking site.

A few full-sized grills have addressed these problems. U.S. Patent No. 3,200,806 uses a relatively less stable three-leg arrangement wherein a pair of pivotally attached legs are themselves pivotally attached to an intersecting third leg, which is itself detachably connected to the grill body. The grill lacks means to prevent accidentally folding and the grill cannot be stored in a folded/standing position.

U.S. Patent No. 3,452,736 discloses a knock-down type grill with separate legs and bowl (grill body).

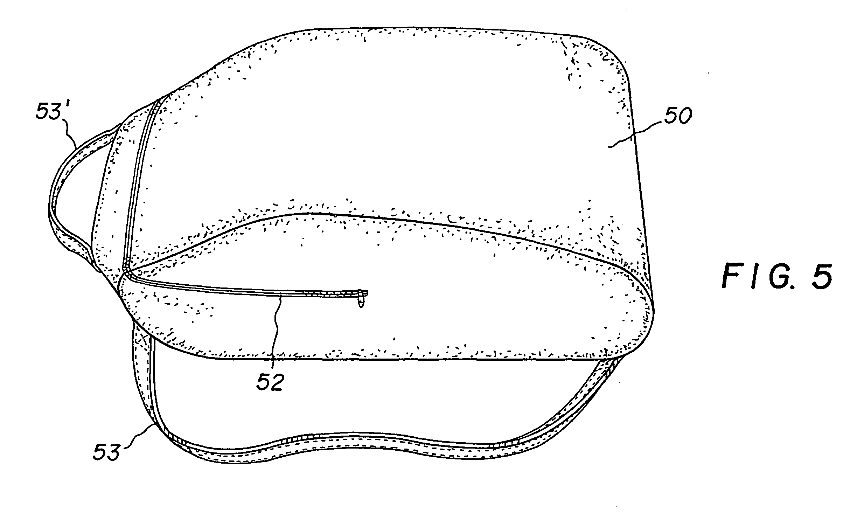

U.S. Patent No. 3,556,076 discloses a folding grill with crossed legs and wheels, wherein one pair of legs is pivotally attached to the grill body and pivotally fixed to the other pair of legs which are detachable from the grill body. The grill lacks means to prevent accidentally folding and the crossed-leg arrangement when folded is not the most compact (see figure 5 of the patent).

U.S. Patent No. 4,210,118 discloses a system similar to U.S. Patent No. 3,556,076 in which the legs are pivotally connected by an off-center link pin that "allows close collapsing of the legs in the folded condition." The tops of both sets of legs are pivotally connected to the grill, but an over-center link allows one set to partially swing away. It is unclear whether the grill can be hung-up or leaned against a wall for storage.

U.S. Patent No. 3,368,430 disclose a foldable portable grill similar to U.S. Patent No. 3,556,076 with two pairs of legs of which one is arranged that the grill can stored hanging on the pair of legs. The grill will be hanged on the lower ends the U-shaped pair of legs resting on the ground when the grill is in operation.

Commonly assigned U.S. Patent No. 5,163,414 discloses a system similar to U.S. Patent No. 3,556,076 with a snap-in cooking grill that stays in place when folded. It lacks wheels for transport and has no means for hanging-type storage.

U.S. Patent No. 5,318,322 discloses a system similar to U.S. Patent No. 3,556,076 in which the legs are pivotally connected. One pair releases at the top to fold into a crossed-leg arrangement Again, there appears to be no means to prevent accidentally folding and the grill cannot be stored in a folded/standing position.

### BRIEF SUMMARY OF THE INVENTION

It is an object of the invention to provide a portable preassembled grill that can be shipped and stored in a collapsed condition.

It is an object of the invention to provide a portable preassembled grill that can be transported in a collapsed condition.

It is an object of the invention to provide a portable preassembled grill with wheels and handles that can be easily moved in a collapsed condition.

It is a further object of the invention to provide a portable preassembled grill that can be erected very quickly without tools.

It is another object of the invention to provide a portable preassembled grill that cannot accidentally collapse after erection.

It is another object of the invention to provide a portable preassembled grill that is adapted for storage or display by hanging from a hook or the like.

It is another object of the invention to provide a portable preassembled grill that can be hung when collapsed from hooks of different sizes.

It is another object of the invention to provide a portable preassembled grill that can be stored when collapsed by standing it on a leg protrusion and leaning it against a wall.

It is another object of the invention to provide a portable preassembled grill that includes a hinged lid and means for retaining the grilling surface to accommodate storage.

It is another object of the invention to provide a portable preassembled grill that includes means to secure a lid to the grill body and means to secure the legs to the grill body to accommodate storage.

It is yet another object of the invention to provide a portable preassembled grill that can be easily stored inside a bag.

According to the present invention there is provided a portable preassembled grill with the features of claim 14 and a method of providing a portable preassembled grill with the steps of claim 1.

### BRIEF DESCRIPTION OF THE DRAWINGS

Additional objects and advantages of the present invention will be apparent in the following detailed description read in conjunction with the accompanying drawing figures.
**Figure 1** discloses a first embodiment of the grill of the present invention in an erected condition.
**Figures 2** disclose a first embodiment of the grill of the present invention in a collapsed condition.
**Figures 3A-3B** disclose a second embodiment of the grill of the present invention that allows stationary upright storage.
**Figure 4** discloses a close-up of the underside of the grill of the present invention in a collapsed condition.
**Figure 5** discloses the grill of the present invention inside a storage cover.

### DETAILED DESCRIPTION OF THE INVENTION

As used herein, the term "grill" is meant to encompass outdoor cooking grills, including, but not limited to, charcoal grills, gas grills, electric grills, solar grills, and wood pellet grills, of any shape that have an upwardly open grill body structure supporting a grilling surface. The terms "front," "rear," and "sides" as used herein relative to the grill body are for describing relative positions and are not meant as a limitation. For example, round grills might not have an actual front, rear, or sides, and for other shapes it would be well within the ability of one of ordinary skill in the art to rotationally reposition the grill body relative to the leg elements.

A primary feature of the present invention is that the grill is portable and can be easily transported and stored. This allows the grill to be used for tailgating, picnics, beach use, etc. When collapsed, a handle at one end and wheels at the other make it easy to transport. Nested legs help the grill fold very flat. The handle and a smaller loop on one of the leg elements increase the hanging storage options. Optionally, legs that extend slightly beyond the wheels when folded can allow the grill to be stored in an upright standing or leaning position. The variety of storage modes allows the grill of the present invention to be easily stored in garages, sheds, utility rooms, etc. by either laying flat, hanging, or leaning against a wall.

Another primary feature of the present invention is that the grill is 100% preassembled and requires no tools to erect. The present invention includes a grill having two pairs of pivoting legs that collapse to have wheels at one end and handle means at the other for easy shipping and consumer handling, but which provides for assembly without tools and cannot accidentally collapse after being erected.

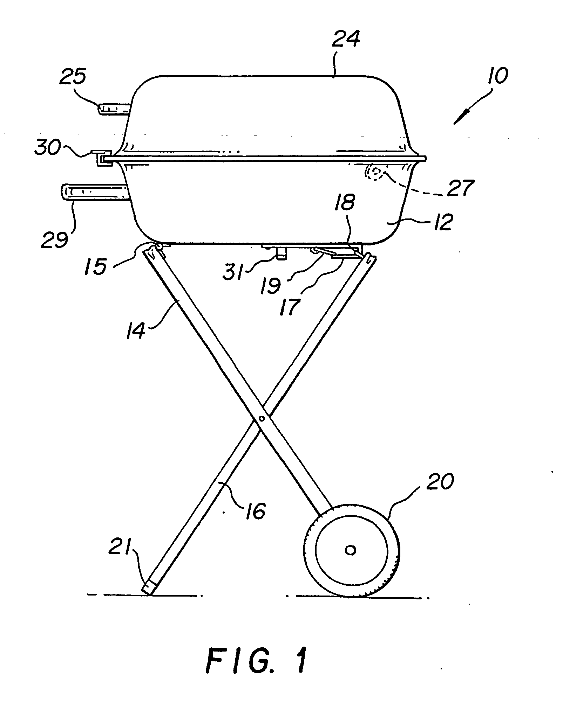

Figure 1 illustrates a first embodiment of portable preassembled grill 10. Grill body 12 is shown as generally square in shape, but may be any other shape used for grills, such, as, but not limited to, rectangular shapes, circular shapes, and combinations thereof. A first pair of support legs 14, formed generally as an inverted U-shape, are fixedly attached to the front portion of grill body 12 via a pivot 15 and extend toward the rear. The ends of legs 14 opposite the pivots hold a pair of wheels 20.

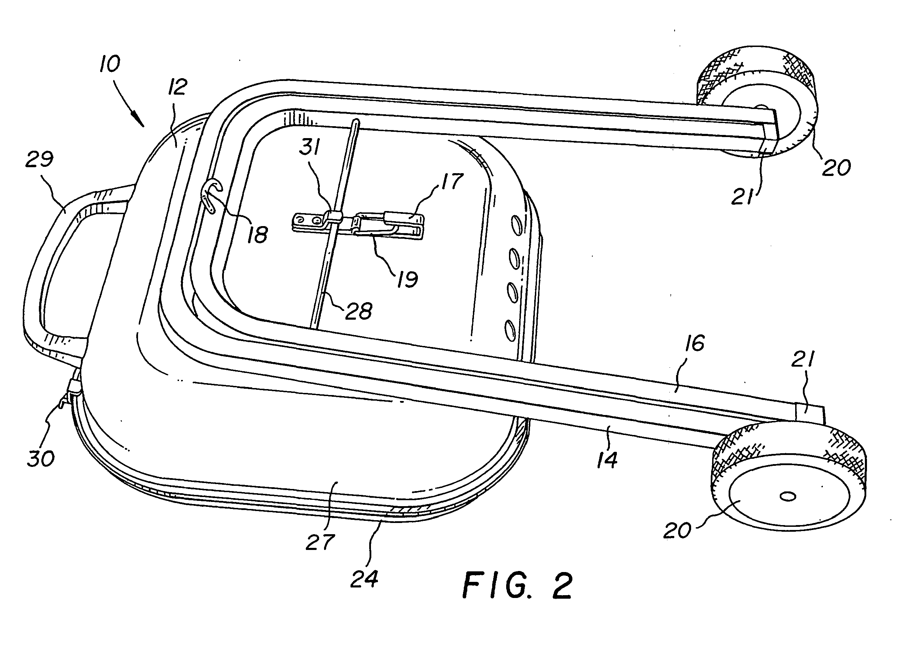

A second pair of support legs 16, formed generally as an inverted U-shape, are releasably attached to the rear portion of grill body 12 via a latch means, formed by a catch 17 and loop 18, and extend towards the front. The ends of legs 16 opposite the pivots can include end caps 21. Legs 16 are pivotally attached to legs 14 from the inside so that legs 16 can be folded inside legs 14, as shown in figure 2.

The grill can also include a lid 24 that is preferably hinged 27 to the grill body 12 so as not to become separated when the grill 10 is moved or hung up for merchandising or storage. The lid 24 can include a handle 25. Like the lid 24, it is also preferable that grilling surface (not shown) be attached to the grill body 12 in such a manner as to not be separated when the grill 10 is not horizontal.

The grill 10 is erected without the use of tools by having a loop 18 at the top of legs 16 engage catch 17. A gravity-activated gate 19 pivots down to prevent the accidental release and collapse. When collapsed, the legs 14 and 16 can be secured in place by a rotating storage latch 31 engaging a crossbar 28 (see figure 2) between legs 16. A handle 29 on the front of grill body 12 can be used for moving the grill 10 in both erected and collapsed conditions and has added utility for hanging the grill 10 from larger hooks for storage. A rotating latch 30 at the front of the grill 10 can be used to secure the front of hinged lid 24 to the grill body 12.

Figure 2 shows grill 10 with storage latch 31 engaging crossbar 28 to secure the assembly in a collapsed condition, with wheels 20 at one end and handle 29 at the other. This configuration is compact for shipping, storage, or transport and is ideally suited for easily being transported by a single person by grabbing handle 29 and rolling the grill 10 to a desired location on wheels 20. It is also an ideal way for consumers to transport the grill 10 out of a retail location after purchasing the grill 10.

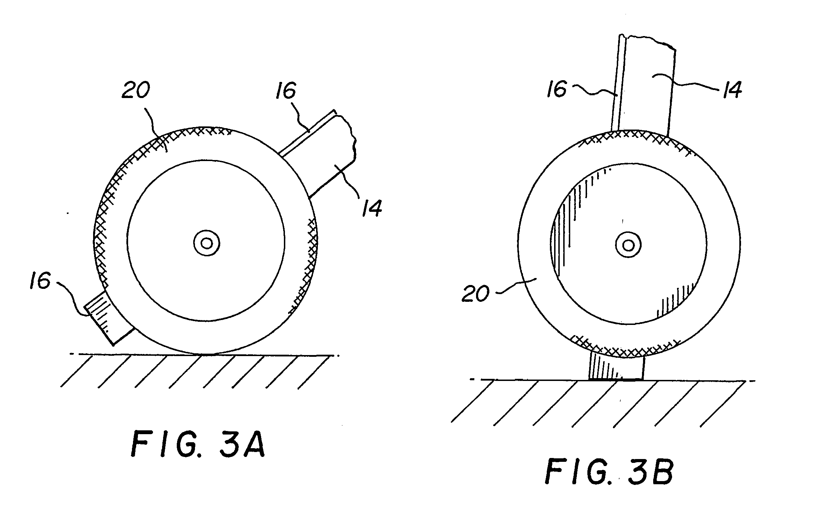

Figures 3A and 3B illustrate an alternate embodiment of portable preassembled grill 10 wherein legs 16 are designed to extend slightly beyond wheels 20. The grill rolls when tilted, as shown in figure 3A, but rests on legs 16 when positioned near an upright position, as shown in figure 3B.

The grill can also include a lid 24 that is preferably hinged to the grill body 12 so as not to become separated when the grill 10 is moved or hung up for merchandising or storage. The grilling surface (not shown) may or may not be attached to the grill body 12, but it is desirable that it be incorporated in such a manner so as to not be separated when the grill 10 is not horizontal.

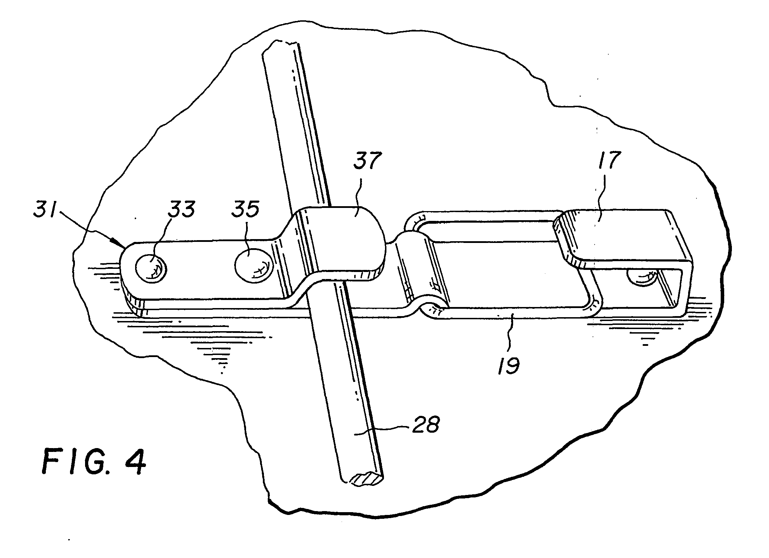

Figure 4 shows a detailed view of the underside of grill 10 in a collapsed condition. Storage latch 31 includes a detent 33 cooperating with the grill body 12 in a known manner to assist positioning the storage latch 31 in the closed position, securing cross bar 28. The storage latch 31 rotates about pivot 35 to release the cross bar 28. A handle portion (not shown) can be added to or formed as part of cross bar-securing section 37 of latch 31 so as to provide increased leverage. Gate 19 can be formed as a rectangular link, pivotally secured to the grill body 12 at one end.

As illustrated in figure 2, loop 18 extends away from the collapsed grill and can be used for hanging the grill on smaller hooks or nails.

The invention can be adapted for use with existing grill bodies. In a preferred embodiment, the legs are formed from cold rolled commercial tubing.

The collapsed configuration is of the present invention is compact for shipping, storage, or transport and is ideally suited for easily being transported by a single person by grabbing handle 29 and rolling the grill 10 to a desired location on wheels 20. It is also an ideal way for consumers to transport the grill 10 out of a retail location after purchasing the grill 10. Handle 29 or loop 18 can also act as a support for hanging the grill in retail locations or at home.

Figure 5 shows a cover 50 for the grill of the present invention. Closure 52, such as, but not limited to, a zipper, snaps, or hook-and-loop fastener, is opened and the grill is placed inside. The closure 52 is then shut to cover the grill for storage or transport. Straps 53, 53' can be included and used for hanging or carrying the combination.

The present invention has been described in terms of preferred embodiments, however, it will be appreciated that various modifications and improvements may be made to the described embodiments without departing from the scope of the invention as described.

## Claims

1. A method of providing a portable preassembled grill, comprising:
providing a grill body (12) having front and rear portions;
pivotally attaching a first pair of support legs (14) to the front portion of the grill body (12);
pivotally attaching a second pair of support legs (16) by pivots to opposing inner sides of a central portion of the first pair of support legs (14); and
providing a catch (17) at a rear portion of said grill body (12),
and providing a loop (18) wherein in a collapsed state, the first pair of support legs (14) and second pair of support legs (16) extend toward the rear of the body grill (12) and in an erected state, the loop (18) of said second pair of support legs (16) engages said catch (17) without tools to form a rigid, raised support base for the grill body (12), **characterized by** said loop extending away from an upper part of said second pair of support legs (16) for engaging and, in a collapsed state, the loop (18) extends away from the collapsed grill.

2. The method of providing a portable preassembled grill of claim 1, further comprising providing a gate (19) on said catch (17).

3. The method of providing a portable preassembled grill of claim 2, wherein said gate (19) on said catch (17) is gravity actuated.

4. A method of providing a portable preassembled grill of claim 1, further comprising means to secure said second pair of support legs (16) to said grill body (12) when in a collapsed state, wherein said means to secure comprises a rotating latch (31) on said grill body (12) that engages a crossbar (28) spanning said second pair of support legs (16).

5. The method of providing a portable preassembled grill of one of claims 1 to 3. further comprising providing means to secure said second pair of support legs (16) to said grill body (12) when in a collapsed state.

6. The method of providing a portable preassembled grill of claim 5, wherein said means to secure comprises a rotating latch (31) on said grill body (12) that engages a crossbar (28) spanning said second pair of support legs (16).

7. The method of providing a portable preassembled grill of one of claims 1 to 6, further comprising attaching wheels (20) to the lower portion of each of the first pair of support legs (14) and providing a handle (29) to the front of the grill body.

8. A method of providing a portable preassembled grill of claim 1, further comprising providing a lid (24) hinged to the grill body (12).

9. The method of providing a portable preassembled grill of claim 8, further comprising providing a lid latch to secure said lid (24) to said grill body (12).

10. The method of providing a portable preassembled grill of claim 1, wherein said loop (18) is additionally used to hang said grill (10) for storage.

11. The method of providing a portable preassembled grill of one of claims 1 to 10, further comprising merchandising the grills (10) by hanging them for display.

12. The method of providing a portable preassembled grill of one of claims 1 to 11, further comprising inserting the grill (10) into a storage cover (50) for transport or storage.

13. The method of providing a portable preassembled grill of claim 7, further comprising transporting the grill (10) from a retail location by rolling the grill (10) on the wheels (20) while in a collapsed condition.

14. A portable preassembled grill, comprising:
a grill body (12) having a front and rear portions;
a first pair of support legs (14) pivotally attached to the front portion of the grill body (12),
a second pair of support legs (16) attached by pivots to opposing inner sides of a central portion of the first pair of support legs (14) and dimensioned to nest within said first pair of support legs (14) when collapsed; and
a catch (17) at a rear portion of said grill body (12), whereby said second pair of support legs (16) comprise a loop (18) (16), and
wherein, in a collapsed state, the nested first and second pair of support fegs (14, 16) extend toward the rear of the grill body (12) and, in an erected state, said loop (18) engages said catch (17) without tools to form a rigid, raised support base for the grill body (12), **characterized in that** said loop extends away from an upper part of said second pair of support legs and, in a collapsed state, said loop (18) extends away from the collapsed grill.

15. The portable preassembled grill of claim 14, further comprising a gate (19) on said catch (17).

16. The portable preassembled grill of claim 15, wherein said gate (19) on said catch (17) pivotally attached to the grill body (12) at one end so as to be gravity actuated.

17. A portable preassembled grill of claim 14, further comprising a rotating latch (31) on said grill body (12) that engages a crossbar (28) spanning said second pair of support legs (16) to secure said second pair of support legs (16) to said grill body (12) when in a collapsed state.

18. The portable preassembled grill of claim 15, further comprising means to secure said second pair of support legs (16) to said grill body (12) when in collapsed state.

19. The portable preassembled grill of claim 18, wherein said means to secure comprises a rotating latch (31) in said grill body (12) that engages a crossbar (28) spanning said second pair of support legs (16).

20. The portable preassembled grill of claim 14, further comprising wheels (20) attached to the lower portion of each of the first pair of support legs (14) and a handle (29) on the front of the grill body.

21. A portable preassembled grill of claim 14, further comprising a lid (24) hinged to the grill body (12).

22. The portable preassembled grill of claim 21, further comprising a lid latch to secure said lid (24) to said grill body (12).

23. The portable preassembled grill of claim 14, wherein said loop (18) is configured to hang said grill (10) for storage.

24. The portable preassembled grill of claim 14, further comprising a storage cover (50) for transport or storage.

25. The method of providing a portable preassembled grill of claim 7, wherein said handle (29) additionally used to hang said grill (10) for storage.

26. A method of providing a portable preassembled grill of claim 7, wherein said second pair of support legs (16) extend beyond the wheels (20) when in a collapsed state so as to allow the grill to be stored upright on said second pair of support legs (16), yet allow the grill roll when tilted.

27. The portable preassembled grill of claim 20, wherein said handle (29) is configured to hang said grill (10) for storage.

28. A portable preassembled grill of claim 20, wherein said second pair of support legs (16) are dimensioned so as to extend beyond the wheels (20) when in a collapsed state so as to allow the grill to be stored upright on said second pair of support legs (16), yet allow the grill to roll when tilted.

## Patentansprüche

1. Verfahren zum Bereitstellen eines tragbaren vormontierten Grills mit:
Vorsehen eines Grillgehäuses (12) mit Vorder- und Rückbereichen;
drehbares Befestigen eines ersten Paares Tragstützen (14) an dem Vorderbereich des Grillgehäuses (12);
drehbares Befestigen eines zweiten Paares Tragstützen (16) durch Drehpunkte auf gegenüberliegenden Innenseiten eines mittleren Bereichs des ersten Paares Tragstützen (14); und
Vorsehen eines Hakens (17) an einem Rückbereich des Grillgehäuses (12), und
Vorsehen einer Öse (18), wobei in einem zusammengeklappten Zustand das erste Paar Tragstützen (14) und das zweite Paar Tragstützen (16) sich in Richtung der Rückseite des Grillgehäuses (12) erstrecken und in einem aufgerichteten Zustand die Öse (18) des zweiten Paares Tragstützen (16) mit dem Haken (17) ohne Werkzeuge eingreift, um eine feste, aufrechte Tragbasis für das Grillgehäuse (12) zu bilden, **dadurch gekennzeichnet, dass** die Öse (18) sich von einem oberen Teil des zweiten Paares Tragstützen (16) zum Eingreifen weg erstreckt und, in einem zusammengeklappten Zustand, die Öse (18) sich von dem zusammengeklappten Grill weg erstreckt.

2. Verfahren zum Bereitstellen eines tragbaren vormontierten Grills nach Anspruch 1, bei dem eine Sperre (19) an dem Haken (17) vorgesehen wird.

3. Verfahren zum Bereitstellen eines tragbaren vormontierten Grills nach Anspruch 2, bei dem die Sperre (19) an dem Haken (17) durch die Schwerkraft betätigt wird.

4. Verfahren zum Bereitstellen eines tragbaren vormontierten Grills nach Anspruch 1, bei dem ferner eine Einrichtung zum Sichern des zweiten Paares Tragstützen (16) an dem Grillgehäuse (12) vorgesehen wird, wenn er in einem zusammengeklappten Zustand ist, wobei die Einrichtung zum Sichern einen drehenden Riegel (31) an dem Grillgehäuse (12) aufweist, der mit einer Querstange (28) in Eingriff kommt, die das zweite Paar Tragstützen (16) überspannt.

5. Verfahren zum Bereitstellen eines tragbaren vormontierten Grills nach einem der Ansprüche 1 bis 3, bei dem ferner eine Einrichtung zum Sichern des zweiten Paares Tragstützen (16) an dem Grillgehäuse (12) vorgesehen wird, wenn er in einem zusammengeklappten Zustand ist.

6. Verfahren zum Bereitstellen eines tragbaren vormontierten Grills nach Anspruch 5, bei dem die Mittel zum Sichern einen drehenden Riegel (31) an dem Grillgehäuse (12) aufweisen, der mit einer Querstange (28) in Eingriff kommt, die das zweite Paar Tragstützen (16) überspannt.

7. Verfahren zum Bereitstellen eines tragbaren vormontierten Grills nach einem der Ansprüche 1 bis 6, bei dem ferner Räder (20) an dem unteren Bereich von jedem des ersten Paares Tragstützen (14) befestigt werden und ein Handgriff (29) an der Vorderseite des Grillgehäuses vorgesehen wird.

8. Verfahren zum Bereitstellen eines tragbaren vormontierten Grills nach Anspruch 1, bei dem ferner ein Deckel (24) vorgesehen wird, der an dem Grillgehäuse (12) angelenkt wird.

9. Verfahren zum Bereitstellen eines tragbaren vormontierten Grills nach Anspruch 8, bei dem ferner ein Drehriegel vorgesehen wird, um den Deckel (24) an dem Grillgehäuse (12) zu sichern.

10. Verfahren zum Bereitstellen eines tragbaren vormontierten Grills nach Anspruch 1, bei dem die Öse (18) zusätzlich zum Aufhängen des Grills (10) zur Lagerung verwendet wird.

11. Verfahren zum Bereitstellen eines tragbaren vormontierten Grills nach einem der Ansprüche 1 bis 10, bei dem ferner der Grill (10) zum Vorzeigen für den Verkauf aufgehängt wird.

12. Verfahren zum Bereitstellen eines tragbaren vormontierten Grills nach einem der Ansprüche 1 bis 11, bei dem ferner der Grill (10) in eine Lagerhülle (50) zum Transport oder zur Lagerung eingefügt wird.

13. Verfahren zum Bereitstellen eines tragbaren vormontierten Grills nach Anspruch 7, bei dem ferner der Grill (10) aus einem Verkaufraum durch Rollen des Grills (10) auf den Rädern (20) in einem zusammengeklappten Zustand transportiert wird.

14. Tragbarer vormontierter Grill mit:
einem Grillgehäuse (12) mit einem Vorder- und Rückbereich;
einem ersten Paar Tragstützen (14), die drehbar an dem Vorderbereich des Grillgehäuses (12) befestigt sind,
einem zweiten Paar Tragstützen (16), die durch Drehpunkte an gegenüberliegenden inneren Seiten eines mittleren Bereichs des ersten Paares Tragstützen (14) befestigt und dimensioniert sind, um sich innerhalb des ersten Paares Tragstützen (14) zusammengeklappt zu verschachteln, und
einem Haken (17) an einem Rückbereich des Grillgehäuses (12), wobei das zweite Paar Tragstützen (16) eine Öse (18) aufweist, und
wobei in einem zusammengeklappten Zustand die verschachtelten ersten und zweiten Paare Tragstützen (14, 16) sich zur Rückseite des Grillgehäuses (12) erstrecken und in einem aufgerichteten Zustand die Öse (18) mit dem Haken (17) ohne Werkzeuge in Eingriff kommt, um eine feste, aufrechte Tragbasis für den Grillgehäuse (12) zu bilden, **dadurch gekennzeichnet, dass** die Öse (18) sich von einem oberen Abschnitt des zweiten Paares Tragstützen (16) weg erstreckt und in einem zusammengeklappten Zustand die Öse (18) sich von dem zusammengeklappten Grill weg erstreckt.

15. Tragbarer vormontierter Grill nach Anspruch 14, der ferner eine Sperre (19) an dem Haken (17) aufweist.

16. Tragbarer vormontierter Grill nach Anspruch 15, bei dem die Sperre (19) an dem Haken (17) drehbar an dem Grillgehäuse (12) an einem Ende befestigt ist, so dass sie schwerkraftbetätigt ist.

17. Tragbarer vormontierter Grill nach Anspruch 14, der ferner einen drehenden Riegel (31) an dem Grillgehäuse (12) aufweist, der mit einer Querstange (28) in Eingriff kommt, die das zweite Paar Tragstützen (16) überspannt, um das zweite Paar Tragstützen (16) an dem Grillgehäuse (12) in einem zusammengeklappten Zustand zu sichern.

18. Tragbarer vormontierter Grill nach Anspruch 15, der ferner eine Einrichtung zum Sichern des zweiten Paares Tragstützen (16) an dem Grillgehäuse (12) in einem zusammengeklappten Zustand aufweist.

19. Tragbarer vormontierter Grill nach Anspruch 18, bei dem die Mittel zum Sichern einen drehenden Riegel (31) an dem Grillgehäuse (12) aufweisen, der mit einer Querstange (28) eingreift, die das zweite Paar Tragstützen (16) überspannt.

20. Tragbarer vormontierter Grill nach Anspruch 14, der ferner Räder (20), die an dem unteren Bereich an jedem des ersten Paares Tragstützen (14) befestigt sind, und einen Handgriff (29) an der Vorderseite des Grillgehäuses aufweist.

21. Tragbarer vormontierter Grill nach Anspruch 14, der ferner einen Deckel (24) aufweist, der an dem Grillgehäuse (12) angelenkt ist.

22. Tragbarer vormontierter Grill nach Anspruch 21, der ferner einen Deckelriegel aufweist, um den Deckel (24) an dem Grillgehäuse (12) zu sichern.

23. Tragbarer vormontierter Grill nach Anspruch 14, bei dem Öse (18) ausgebildet ist, um den Grill (10) zur Lagerung aufzuhängen.

24. Tragbarer vormontierter Grill nach Anspruch 14, der ferner eine Lagerhülle (50) zum Transport oder zur Lagerung aufweist.

25. Verfahren zum Bereitstellen eines tragbaren vormontierten Grills nach Anspruch 7, bei dem der Handgriff (29) zusätzlich zum Aufhängen des Grills (10) zur Lagerung verwendet wird.

26. Verfahren zum Bereitstellen eines tragbaren vormontierten Grills nach Anspruch 7, bei dem das zweite Paar Tragstützen (16) sich über die Räder (20) in einem zusammengeklappten Zustand erstreckt, um dem Grill zu ermöglichen, aufrecht auf dem zweiten Paar Tragstützen (16) gelagert zu werden, und außerdem dem Grill ein Rollen ermöglicht, wenn er schräg gestellt ist.

27. Tragbarer vormontierter Grill nach Anspruch 20, bei dem der Handgriff (29) ausgebildet ist, den Grill (10) zur Lagerung aufzuhängen.

28. Tragbarer vormontierter Grill nach Anspruch 20, bei dem das zweite Paar Tragstützen (16) dimensioniert ist, so dass es über die Räder (20) in einem zusammengeklappten Zustand hervorsteht, um dem Grill zu ermöglichen, aufrecht auf dem zweiten Paar Tragstützen (16) gelagert zu werden, und außerdem dem Grill ein Rollen ermöglicht, wenn er schräg gestellt ist.

## Revendications

1. Procédé pour fournir un grill portable pré-assemblé, comprenant :
- fournir un corps de grill (12) ayant des parties avant et arrière ;
- relier de façon pivotante une première paire de pieds de support (14) à la partie avant du corps de grill (12) ;
- relier de façon pivotante une deuxième paire de pieds de support (16) par des pivots à deux côtés intérieurs opposés d'une partie centrale de la première paire de pieds de support (14) ; et,
- fournir un crochet (17) sur une partie arrière dudit corps de grill (12) et fournir une boucle (18),
dans lequel, lorsque dans un état replié, la première paire de pieds de support (14) et la deuxième paire de pieds de support (16) s'étendent vers l'arrière du corps de grill (12) et dans un état érigé, la boucle (18) de ladite deuxième paire de pieds de support (16) vient en prise avec ledit crochet (17) sans outil, pour former une base de support dressée et rigide pour le corps de grill (12),
**caractérisé en ce que** ladite boucle s'étend en s'éloignant d'une partie supérieure de ladite deuxième paire de pieds de support (16) pour venir en prise et, dans un état replié, la boucle (18) s'étend en s'éloignant du grill replié.

2. Procédé pour fournir un grill portable pré-assemblé selon la revendication 1, comprenant en outre une porte (19) sur ledit crochet (17).

3. Procédé pour fournir un grill portable pré-assemblé selon la revendication 2, dans lequel ladite porte (19) sur ledit crochet (17) est activée par la gravité.

4. Procédé pour fournir un grill portable pré-assemblé selon la revendication 1, comprenant en outre des moyens pour fixer ladite deuxième paire de pieds de support (16) audit corps de grill (12) lorsque dans un état replié, dans lequel lesdits moyens de fixation comprennent un verrou rotatif (31) sur ledit corps de grill (12) qui vient en prise avec une barre transversale (28) s'étendant en travers de la deuxième paire de pieds de support (16).

5. Procédé pour fournir un grill portable pré-assemblé selon l'une des revendications 1 à 3, comprenant en outre des moyens pour fixer ladite deuxième paire de pieds de support (16) audit corps de grill (12) lorsque dans un état replié.

6. Procédé pour fournir un grill portable pré-assemblé selon la revendication 5, dans lequel lesdits moyens de fixation comprennent un verrou rotatif (31) sur ledit corps de grill (12) qui vient en prise avec une barre transversale (28) s'étendant en travers de la deuxième paire de pieds de support (16).

7. Procédé pour fournir un grill portable pré-assemblé selon l'une des revendications 1 à 6, comprenant en outre la fixation de roues (20) à une partie basse de chacun des pieds de support de ladite première paire (14) et fournir une poignée (29) à l'avant de corps de grill.

8. Procédé pour fournir un grill portable pré-assemblé selon la revendication 1, comprenant en outre la fourniture d'un couvercle (24) relié audit corps de grill (12) par des charnières.

9. Procédé pour fournir un grill portable pré-assemblé selon la revendication 8, comprenant en outre la fourniture d'un verrou de couvercle pour fixer ledit couvercle (24) sur ledit corps de grill (12).

10. Procédé pour fournir un grill portable pré-assemblé selon la revendication 1, dans lequel ladite boucle (18) est de plus utilisée pour suspendre ledit grill (10) lors de son stockage.

11. Procédé pour fournir un grill portable pré-assemblé selon l'une des revendications 1 à 10, comprenant en outre la mise en vente des grills (10) en les suspendant pour les présenter.

12. Procédé pour fournir un grill portable pré-assemblé selon l'une des revendications 1 à 11, comprenant en outre l'insertion du grill (10) dans une couverture de stockage (50) en vue de son transport ou de son stockage.

13. Procédé pour fournir un grill portable pré-assemblé selon la revendication 7, comprenant en outre le transport du grill (10) depuis chez un détaillant par roulement du grill (10) sur les roues (20) alors qu'il est dabs une position repliée.

14. Grill portable pré-assemblé, comprenant :
- un corps de grill (12) ayant des parties avant et arrière;
- une première une première paire de pieds de support (14) relié de façon pivotante à la partie avant du corps de grill (12) ;
- une deuxième paire de pieds de support (16) reliée par des pivots à deux côtés intérieurs opposés d'une partie centrale de la première paire de pieds de support (14) et dimensionnée pour venir se niche à l'intérieur de ladite première paire de pieds de support (14) lorsque dans une position repliée ; et,
- un crochet (17) sur une partie arrière dudit corps de grill (12), de sorte que ladite deuxième paire de pieds de support (16) comprend une boucle (18) et dans lequel, lorsque dans un état replié, les nichées première et deuxième paires de pieds de support (14,16) s'étendent vers l'arrière du corps de grill (12) et dans un état érigé, la boucle (18) vient en prise avec ledit crochet (17) sans outil, pour former une base de support dressée et rigide pour le corps de grill (12),
**caractérisé en ce que** ladite boucle s'étend en s'éloignant d'une partie supérieure de ladite deuxième paire de pieds de support (16) et, dans un état replié, ladite boucle (18) s'étend en s'éloignant du grill replié.

15. Grill portable pré-assemblé, selon la revendication 14, comprenant en outre une porte (19) sur ledit crochet (17).

16. Grill portable pré-assemblé, selon la revendication 15, dans lequel ladite porte (19) sur ledit crochet (17) est montée pivotante sur le corps de grill (12) par une extrémité de façon à être activée par la gravité.

17. Grill portable pré-assemblé, selon la revendication 14, comprenant en outre un verrou rotatif (31) sur ledit corps de grill (12) qui vient en prise avec une barre transversale (28) s'étendant en travers de la deuxième paire de pieds de support (16) pour fixer ladite deuxième paire de pieds de support (16) audit corps de grill (12) lorsque dans un état replié.

18. Grill portable pré-assemblé, selon la revendication 15, comprenant en outre des moyens pour fixer ladite deuxième paire de pieds de support (16) audit corps de grill (12) lorsque dans un état replié.

19. Grill portable pré-assemblé, selon la revendication 18, dans lequel lesdits moyens de fixation comprennent un verrou rotatif (31) sur ledit corps de grill (12) qui vient en prise avec une barre transversale (28) s'étendant en travers de la deuxième paire de pieds de support (16).

20. Grill portable pré-assemblé, selon la revendication 14, comprenant en outre des roues (20) fixées à une partie basse de chacun des pieds de support de ladite première paire (14) et une poignée (29) à l'avant de corps de grill.

21. Grill portable pré-assemblé, selon la revendication 14, comprenant en outre un couvercle (24) relié audit corps de grill (12) par des charnières .

22. Grill portable pré-assemblé, selon la revendication 21, comprenant en outre un verrou de couvercle pour fixer ledit couvercle (24) sur ledit corps de grill (12).

23. Grill portable pré-assemblé, selon la revendication 14, dans lequel ladite boucle (18) est configure pour suspendre ledit grill (10) lors de son stockage.

24. Grill portable pré-assemblé, selon la revendication 14, comprenant en outre une couverture de stockage (50) en vue de son transport ou de son stockage.

25. Procédé pour fournir un grill portable pré-assemblé selon la revendication 7, dans lequel ladite poignée (29) est en outre utilisée pour suspendre ledit grill (10) lors de son stockage.

26. Procédé pour fournir un grill portable pré-assemblé selon la revendication 7, dans lequel ladite deuxième paire de pieds de support (16) s'étend au-delà des roues (20) lorsque dans un état replié, de façon à permettre le stockage du grill dans une position debout sur ladite deuxième paire de pieds de support (16), et cependant permettre de faire rouler le grill lorsqu'il est basculé.

27. Grill portable pré-assemblé, selon la revendication 20, dans lequel ladite poignée (29) est configurée pour suspendre ledit grill (10) lors de son stockage.

28. Grill portable pré-assemblé, selon la revendication 20, dans lequel ladite deuxième paire de pieds de support (16) est dimensionnée de façon à s'étendre au-delà des roues (20) lorsque dans un état replié, de façon à permettre le stockage du grill dans une position debout sur ladite deuxième paire de pieds de support (16), et cependant permettre de faire rouler le grill lorsqu'il est basculé.
